Europäisches Patentamt

European Patent Office

Office européen des brevets

(19)

(11) Veröffentlichungsnummer: **0 394 855**

**A1**

(12) **EUROPÄISCHE PATENTANMELDUNG**

(21) Anmeldenummer: **90107496.3**

(22) Anmeldetag: **20.04.90**

(51) Int. Cl.5: **F16K 11/08, F16K 1/24**

(30) Priorität: **27.04.89 DE 3913934**

(43) Veröffentlichungstag der Anmeldung:
**31.10.90 Patentblatt 90/44**

(84) Benannte Vertragsstaaten:
**AT FR GB IT**

(71) Anmelder: **KAEFER Isoliertechnik GmbH & Co.**
**Kommanditgesellschaft**
**Bürgermeister-Smidt-Strasse 70**
**D-2800 Bremen 1(DE)**

(72) Erfinder: **Seltmann, Günther**
**Werderhöhe 30**
**D-2800 Bremen 1(DE)**

(74) Vertreter: **Bruse, Willy Hans Heinrich**
**Edisonstrasse 14**
**D-2800 Bremen 33(DE)**

(54) **Vorrichtung zur Ablenkung und/oder Teilung eines Gasstromes.**

(57) Die beschriebene Vorrichtung ist zur Ablenkung und/oder Teilung eines Gasstromes, insbesondere eines Gasstromes in einer Gasleitung bestimmt. Sie besteht aus einem in die Gasleitung einbaubaren Gehäuse (1) mit zwei Anschlußöffnungen (3,4) an sich gegenüberliegenden Gehäuseseiten für den geraden Durchgang sowie wenigstens einer weiteren seitlichen Anschlußöffnung (5) für einen abgelenkten Gasstrom und aus einem Absperrkörper (6), der in dem Gehäuse (1) um eine quer zum Gasstrom liegende Achse zwischen einer Sperrlage vor der seitlichen Anschlußöffnung (5) und einer Sperrlage vor einer der beiden Anschlußöffnungen (4) für den geraden Durchgang schwenkbar gelagert ist. Das Gehäuse (1) ist zylindrisch ausgebildet und der Absperrkörper (6) an diese zylindrische Form angepaßt. Letzterer ist sowohl um eine etwa zentral in dem zylindrischen Gehäuse (1) gelagerte Achse (10) schwenkbar als auch gegenüber dieser Achse radial beweglich angeordnet. Er weist außerdem eine Rahmendichtung (11) auf, die durch diese radiale Bewegung wirksam ist.

Fig. 3

## Vorrichtung zur Ablenkung und/oder Teilung eines Gasstromes

Die Erfindung bezieht sich auf eine Vorrichtung zur Ablenkung und/oder Teilung eines Gasstromes mit Gattungsmerkmalen nach dem Oberbegriff des Patentanspruches 1. Die Erfindung bezieht sich insbesondere auf eine Vorrichtung zur Ablenkung eines Abgasstromes in Anlagen zum Betrieb einer oder mehrerer Abgasturbinen, so daß die nachfolgenden Erläuterungen vor allem auf solche Anlagen für den Betrieb von Abgasturbinen gerichtet sind.

Bekannt sind diese Merkmale aus der Firmendruckschrift Bachmann Industries, Inc., 29 Lexington Street, Lewiston, Maine, U.S.A., gemäß Anlage. Das Gehäuse der Vorrichtung ist danach kastenförmig mit ebenen Wänden ausgebildet. An zwei sich im geraden Durchgang gegenüberliegenden, zueinander parallelen Seiten sind Anschlußöffnungen vorgesehen, die mit den zugekehrten Enden der Gasleitung verflanschbar sind, während eine dritte Anschlußöffnung sich im rechten Winkel dazu an der Oberseite des Gehäuses oder auch an einer Seite des Gehäuses befindet. Dementsprechend ist auch der Absperrkörper als eine ebene Platte ausgebildet und in der Ecke zwischen der oberen (seitlichen) Anschlußöffnung und einer der beiden anderen, nämlich der in Strömungsrichtung hinteren Anschlußöffnung für den geraden Durchgang, um eine quer zur Strömungsrichtung liegende Achse schwenkbar gelagert, so daß dieser klappenartige Absperrkörper wechselweise vor diese letztere Anschlußöffnung oder vor die obere (seitliche) Anschlußöffnung schwenkbar ist. Zwischenstellungen sind möglich, um gegebenenfalls einen Teilstrom zu lenken, wie es zum Beispiel für den Anfahrvorgang von Gasturbinen oder dergleichen erforderlich ist. In solchen Fällen lastet der Strömungsdruck auf dem Absperrkörper, so daß Lagerung, Antriebsmittel und Eigensteifigkeit entsprechend auszulegen sind. Hohe Anforderungen an die Dichtigkeit sind mit solchen ebenen Absperrkörpern nicht zu erfüllen. Der kantige Querschnitt des Gehäuses führt zu unerwünschten Wirbeln in dem Gehäuse, vor allem, wenn das Gas in Leitungen mit rundem Querschnitt strömt, die aus kostengünstigen Rohren zusammensetzbar sind. Ein Festigkeitsproblem wird durch die geraden Wände des Gehäuses hervorgerufen, die bei vorgegebenen Drucken in der Gasleitung entsprechend auf der Außenseite auszusteifen sind, so daß die Vorrichtung insgesamt sperrig und klobig wirkt.

Aufgabe der Erfindung ist es demzufolge, eine Ausbildung für die Vorrichtung zu schaffen, die hohe Anforderungen an die Dichtigkeit zuläßt, weniger raumgreifend baut und mit einem geringeren Gewicht herstellbar ist sowie auch einen geringeren Strömungswiderstand bildet.

Diese Aufgabe wird erfindungsgemäß durch Ausbildungsmerkmale nach dem Kennzeichen des Anspruches 1 bei einer Vorrichtung nach dem Oberbegriff des Patentanspruches 1 gelöst.

Wesentlicher Gedanke der Erfindung ist somit die Gestaltung des Gehäuses und des Absperrkörpers nach Art eines Absperrschiebers für Flüssigleitungen. Die Gasdichtigkeit des Schiebers wird vor allem dadurch erreicht, daß der Absperrkörper radial beweglich angeordnet ist, so daß er vor seiner Schwenkbewegung aus einem dichtenden Sitz am Gehäuse zurückgezogen, dann in einem Winkelbereich verschwenkt und schließlich in einer neuen Schwenklage wieder radial nach außen in einen anderen Dichtungssitz hineinbewegt werden kann. Das schließt nicht aus, daß der Absperrkörper zwischen den Dichtungslagen in jeder beliebigen Zwischenstellung ebenfalls verharren kann, um einen Gasstrom in mehrere Teilströme aufzuteilen, wie es an sich bekannt ist. Der Absperrkörper der erfindungsgemäßen Ausbildung wird also durch eine radiale Bewegung von der Mittelachse des zylindrischen Gehäuses nach außen in einen Dichtungssitz hineinbewegt, der eine absolute Dichtung der verschlossenen Anschlußöffnung gewährleistet. Vor dem Verschwenken des Absperrkörpers muß dieser somit radial nach innen aus der Dichtung herausbewegt werden, um die Schwenkbewegung in eine andere Position zu ermöglichen.

Bei einer bevorzugten Ausführungsform ist diese Dichtung als Rahmendichtung erhaben auf der Außenseite des an die zylindrische Gehäuseform angepaßten Absperrkörpers ausgebildet. Diese Rahmendichtung wirkt mit einer komplementär geformten, die Anschlußöffnung des Gehäuses umgebenden Ausnehmung an der Innenseite des Gehäuses zusammen. Bevorzugt wird eine Rahmendichtung am Absperrkörper, die im Querschnitt ein Schwertprofil aufweist, wobei die komplementäre Ausnehmung am Gehäuse elastisch verformbare Wandungen aufweist, zwischen die das Schwertprofil der Rahmendichtung unter elastischer Verformung der Wandungen der Ausnehmung eingeschoben wird. Um diese Dichtung auch gegen aggressive Teilchen, die im Gasstrom mitgeführt werden, gegen hohe Temperaturen und andere Einflüsse resistent auszubilden, sieht eine Weiterbildung der Erfindung vor, daß die Wandungen der die Anschlußöffnung umgebenden Ausnehmungen für das Schwertprofil der Rahmendichtung am Absperrkörper aus Stahlblechelementen bestehen, die einseitig an dem Gehäuse befestigt sind, so daß die der Befestigung gegenüberliegende Seite der Stahlblechelemente durch das in die Ausnehmung eindringende Schwertprofil unter elastischer Verformung weggedrückt werden und sich dann dicht gegen die Flanken des Schwertprofils anlegen. Vorteilhaft ist eine Anordnung der Stahlblechelemente in schuppenartiger, gegenseitiger Überdeckkung, so daß keine Undichtigkeiten ergebende Spaltbildung eintritt.

Zum Schutze dieser Dichtung aus einseitig befestigten Stahlblechelementen ist eine weitere, die erstere umgebende Rahmendichtung zweckmäßig, die zum Beispiel aus einem Stegrahmen an dem einen Teil und einem im Querschnitt u-förmigen Rahmen an dem anderen Teil besteht, in den der Stegrahmen im Dichtsitz des Absperrkörpers einfaßt.

Für die radiale Bewegung des Absperrkörpers zur Erzielung des Dichtsitzes und zum Lösen des Dichtsitzes ist eine Abstützung des Absperrkörpers auf Streben vorgesehen, die den Absperrkörper gelenkig mit Exzentern verbinden, deren Verdrehung eine Radialbewegung der den Absperrkörper tragenden Streben bewirken. Die Ansprüche 7 und 8 beziehen sich auf vorteilhafte Gestaltungsmerkmale einer solchen Antriebseinrichtung.

Auf der Zeichnung ist ein Ausführungsbeispiel der Erfindung schematisch dargestellt. Es zeigen:

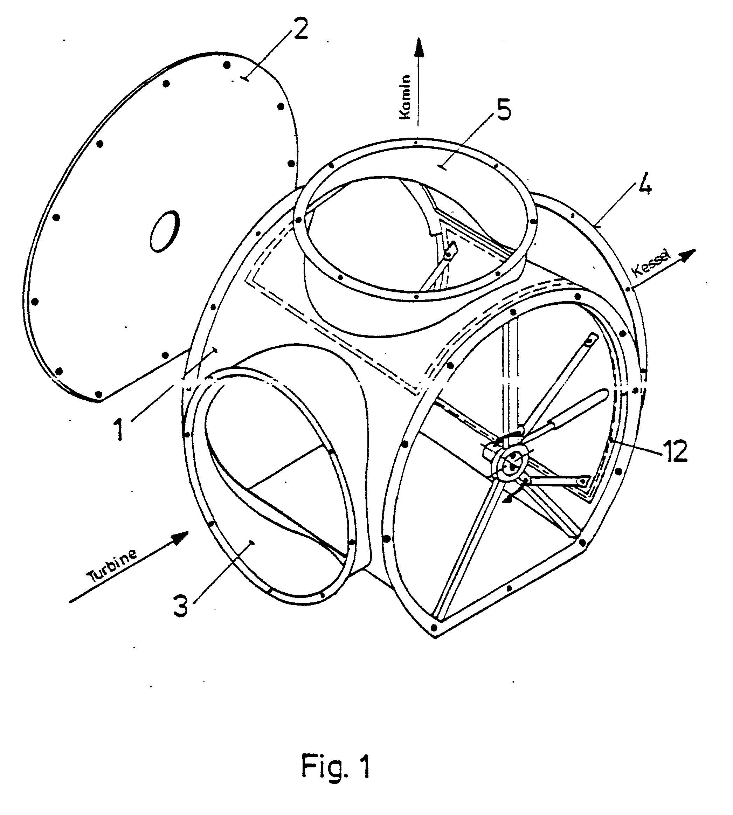

Figur 1 eine perspektivische Ansicht der Vorrichtung nach der Erfindung,

Figur 2 eine teilweise Seitenansicht des Absperrkörpers in einer Dichtungsposition,

Figur 3 eine Seitenansicht entsprechend Figur 2 in der Schwenkposition des Absperrkörpers,

Figur 4 einen vergrößerten Teilschnitt der Ansicht nach Figur 2 und

Figur 5 einen vergrößerten Teilschnitt der Ansicht nach Figur 3.

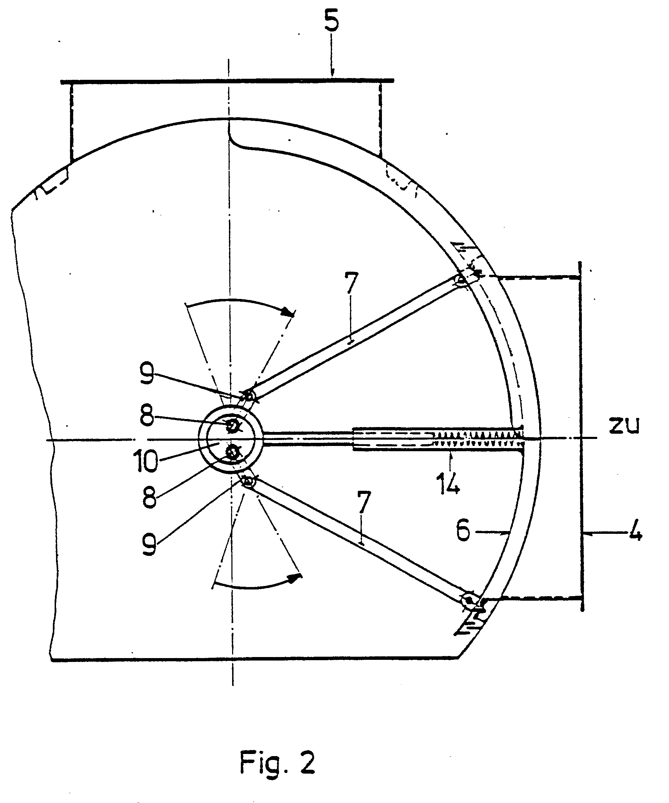

Die Vorrichtung besteht aus einem im Querschnitt im wesentlichen zylindrischen Gehäuse 1 mit ebenen Stirnflächen, die durch aufschraubbare Deckel 2 oder dergleichen verschließbar sind, von denen aus Gründen der besseren Übersicht nur ein Deckel dargestellt wurde. Das zylindrische Gehäuse 1 weist an zwei sich in Richtung des Gasstromes in der Gasleitung gegenüberliegenden Seiten Anschlußöffnungen 3 und 4 auf, die mit den zugekehrten Enden der auf der Zeichnung nicht dargestellten Gasleitung verbindbar, zum Beispiel verflanschbar, sind. Eine weitere Anschlußöffnung 5 befindet sich etwa im rechten Winkel zu den beiden Anschlußöffnungen 3 und 4 an der Oberseite des Gehäuses 1. Dabei liegen die Mittelachsen der Anschlußöffnungen 3, 4 und 5 jedoch in einer gemeinsamen Ebene quer zur Mittelachse des zylindrischen Gehäuses 1. Der innerhalb des zylindrischen Gehäuses 1 angeordnete Absperrkörper 6 ist in seiner Form an die zylindrische Form des Gehäuses 1 angepaßt und in der Größe so bemessen, daß er die Anschlußöffnungen 3, 4 oder 5 überdeckt. Der aus den Figuren 2 bis 5 besser erkennbare Absperrkörper ist mittels Streben 7 gelenkig mit Exzentern 8 über Kniehebellaschen 9 verbunden, so daß eine Verdrehung der Exzenter 8 eine radiale Bewegung der den Absperrkörper 6 tragenden Streben hervorruft. Durch Verdrehung der Exzenter 8 in der einen oder anderen Richtung kann somit eine Radialbewegung des Absperrkörpers 6 nach innen oder nach außen erreicht werden. Mit dieser Antriebseinrichtung ist der Absperrkörper 6 auf einer etwa zentral in dem zylindrischen Gehäuse 1 gelagerten Welle 10 abgestützt, durch deren Verdrehung der Absperrkörper wenigstens in einem begrenzten Winkelbereich schwenkbar ist, so daß er sowohl die eine Anschlußöffnung für den geraden Durchgang, nämlich die in Strömungsrichtung hintere Anschlußöffnung 4, als auch die obere bzw. seitliche Anschlußöffnung 5, absperren kann. Diese Schwenkbewegung ist jedoch nur möglich, wenn der Absperrkörper 6 mit seiner Dichtung aus einer Gegendichtung radial nach innen herausgezogen wurde, die die Anschlußöffnung umgibt.

Diese Dichtung besteht aus einer an der Außenseite des Absperrkörpers angeordneten, in sich geschlossenen Rahmendichtung 11 und aus einer komplementär geformten, die Anschlußöffnung 4 bzw. 5 des Gehäuses 1 umgebenden Ausnehmung 12, die durch radiale Bewegung des Absperrkörpers 6 in gegenseitigen Eingriff gebracht werden können. Bevorzugt wird für die Rahmendichtung 11 am Absperrkörper ein Schwertprofil und eine komplementäre Ausnehmung am Gehäuse 1 mit elastisch verformbaren Wandungen. Diese elastisch verformbaren Wandungen werden in dem Ausführungsbeispiel durch an der inneren Gehäusewand einseitig befestigte Stahlblechelemente 13 gebildet, deren der Befestigung gegenüberliegende Seite nach innen gegen die Gehäusewand gekrümmt sind, so daß zwei Reihen von Blechelementen 13 zwischen sich einen Spalt bilden, der durch die Materialelastizität verschlossen wird und in den das Schwertprofil der Rahmendichtung bei einer Radialbewegung nach außen eingeführt werden kann und dann dicht umschlossen wird. Diese Gasdichtung ist im Falle des Beispieles von weiteren mechanischen Dichtungsmitteln aus hochkant angeordneten Blechstreifen 13 umgeben, die lamellenartig ineinandergreifen und die Gasdichtungsmittel gegen mechanische Beschädigung schützen.

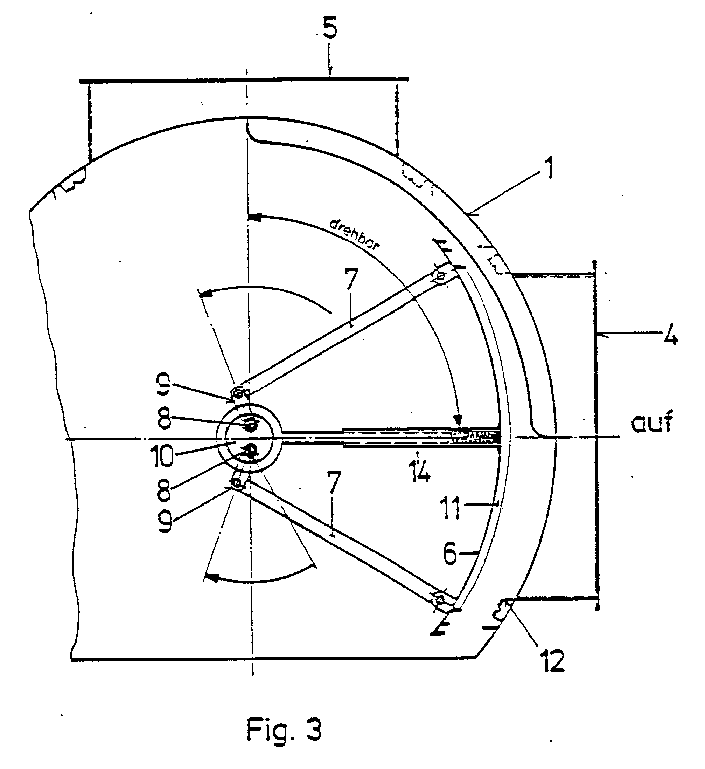

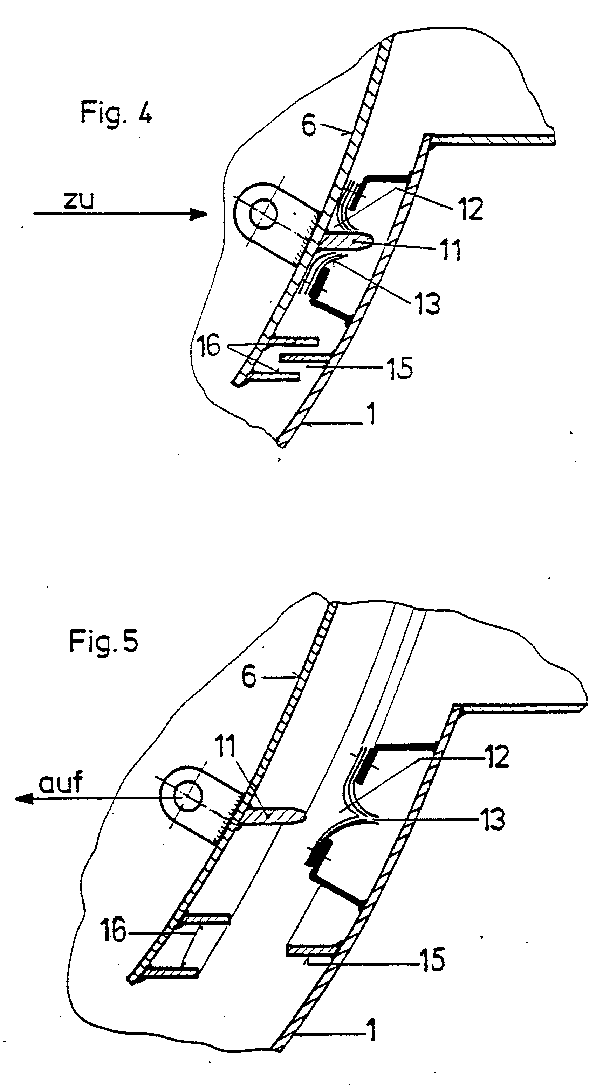

Die Figur 4 zeigt den Absperrkörper in der Dichtungsposition, während die Figur 5 die auseinandergezogene Position der Dichtung wiedergibt. In dieser letzteren Position ist der Absperrkörper 6 um die Achse der Welle 10 schwenkbar, so daß der Absperrkörper 6 zum Beispiel von der die Anschlußöffnung 4 versperrenden Position in eine die Anschlußöffnung 5 absperrende Position oder in eine beliebige Zwischenstellung geschwenkt werden kann. Zur Erhöhung der Steifigkeit des Absperrkörpers 6 können zwischen den Anlenkpunkten der Streben 7 weitere Versteifungselemente vorgesehen sein. Dargestellt ist in den Figuren 2 und 3 ein Federelement 14 aus teleskopisch ineinandergreifenden und nach außen gegeneinander abgefederten Elementen, die den Absperrkörper in der Mitte nach außen gegen die Dichtungsfläche an der innenseite des Gehäuses 1 drücken.

Zum Schutze der Gasdichtung aus dem Rahmen 11 und den Stahlblechelementen 13 innerhalb der Ausnehmung 12 ist eine weitere, die erstere umgebende Rahmendichtung aus einem am Gehäuse 1 befestigten Stegrahmen 15 und einem am Absperrkörper 6 angeordneten, im Querschnitt u-förmigen Rahmen 16 vorgesehen, in den der Stegrahmen 15 im Dichtsitz des Absperrkörpers eingreift, um so mechanische Krafteinwirkungen von der Gasdichtung fernzuhalten.

BEZUGSZEICHENLISTE:

1 Gehäuse
2 Deckel
3 Anschlußöffnung
4 Anschlußöffnung
5 Anschlußöffnung
6 Absperrkörper
7 Strebe
8 Exzenter
9 Kniehebellaschen
10 Welle
11 Rahmendichtung
12 Ausnehmung
13 Blechelement
14 Federelement
15 Stegrahmen
16 U-Rahmen

Ansprüche

1. Vorrichtung zur Ablenkung und/oder Teilung eines Gasstromes, insbesondere eines Abgasstromes in einer Gasleitung, bestehend aus einem in die Gasleitung einbaubaren Gehäuse mit zwei Anschlußöffnungen an sich gegenüberliegenden Gehäuseseiten für den geraden Durchgang sowie wenigstens einer seitlichen Anschlußöffnung für einen abgelenkten Gasstrom und aus einem Absperrkörper, der in dem Gehäuse um eine quer zum Gasstrom liegende Achse zwischen einer Sperrlage vor der seitlichen Anschlußöffnung und einer Sperrlage vor einer der beiden Anschlußöffnungen für den geraden Durchgang schwenkbar gelagert ist, dadurch gekennzeichnet, daß das Gehäuse (1) zylindrisch mit an seinem Mantel angeordneten Anschlußöffnungen (3,4,5) ausgebildet und ein an diese zylindrische Form angepaßter Absperrkörper (6) vorgesehen ist, der sowohl um eine etwa zentral in dem zylindrischen Gehäuse gelagerte Achse (10) schwenkbar als auch gegenüber dieser Achse (10) radial beweglich gelagert ist und eine Rahmendichtung (11) aufweist, die durch die radiale Bewegung des Absperrkörpers (6) wirksam ist.

2. Vorrichtung nach Anspruch 1, dadurch gekennzeichnet, daß die Rahmendichtung (11) erhaben ausgebildet ist und mit einer komplementär geformten, die Anschlußöffnung (4,5) des Gehäuses (1) umgebenden Ausnehmung (12) an der Innenseite des Gehäuses (1) zusammenwirkt.

3. Vorrichtung nach Anspruch 2, dadurch gekennzeichnet, daß die Rahmendichtung (11) am Absperrkörper (6) im Querschnitt ein Schwertprofil und die komplementäre Ausnehmung (12) am Gehäuse (1) elastisch verformbare Wandungen aufweist.

4. Vorrichtung nach Anspruch 3, dadurch gekennzeichnet, daß die Wandungen der das Schwertprofil der Rahmendichtung (11) am Absperrkörper (6) in der Dichtungslage aufnehmenden Ausnehmung (12) an der inneren Gehäusewand aus einseitig befestigten Stahlblechelementen (13) bestehen.

5. Vorrichtung nach Anspruch 4, dadurch gekennzeichnet, daß die Stahlblechelemente (13) in gegenseitiger, schuppenartiger Überdeckung angeordnet sind.

6. Vorrichtung nach Anspruch 1, dadurch gekennzeichnet, daß der Absperrkörper (6) mittels Streben (7) gelenkig mit Exzentern (8) verbunden ist, deren Verdrehung eine Radialbewegung der den Absperrkörper tragenden Streben (7) bewirkt.

7. Vorrichtung nach Anspruch 6, dadurch gekennzeichnet, daß die Streben (7) mittels Kniehebellaschen (9) mit exzentrisch in der Schwenkwelle (10) für den Absperrkörper gelagerten Stellwellen verbunden sind.

8. Vorrichtung nach einem der vorhergehenden Ansprüche, dadurch gekennzeichnet, daß der Absperrkörper (6) durch Federelemente (14) zusätzlich abgestützt und in Dichtungsrichtung belastet ist.

9. Vorrichtung nach einem der vorhergehenden Ansprüche, dadurch gekennzeichnet, daß eine weitere, die Rahmendichtung (11,12,13) umgebende Rahmendichtung aus einem Stegrahmen (15), welcher an dem einen Teil (1) befestigt ist, und einem im Querschnitt u-förmigen Rahmen (16) an dem anderen Teil (6) vorgesehen ist, in den der Stegrahmen (15) im Dichtsitz des Absperrkörpers (6) eingreift.

Fig. 1

EP 0 394 855 A1

Fig. 2

Fig. 3

Fig. 4

zu

6

12

11

13

16

15

1

Fig. 5

6

11

auf

16

12

13

15

1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 683 913 (HOFFMAN) <br> * Spalte 2, Zeile 63 – Spalte 4, Zeile 6; Figuren 1-5 * <br> --- | 1-3,6 | F 16 K 1/08 <br> F 16 K 1/24 |
| A | FR-A-2 243 380 (ECKARDT) <br> * Ansprüche 1,9; Figur 4 * <br> --- | 1 | |
| A | US-A-4 288 060 (MITTEL) <br> * Zusammenfassung; Figuren 1-3 * <br> --- | 1 | |
| A | FR-A-1 506 013 (CASAS) <br> --- | | |
| A | US-A-4 470 429 (JOHNSON) <br> ----- | | |
| | | | **RECHERCHIERTE SACHGEBIETE (Int. Cl.5)** <br><br> F 16 K <br> F 01 N |

Der vorliegende Recherchenbericht wurde für alle Patentansprüche erstellt

| Recherchenort | Abschlußdatum der Recherche | Prüfer |
|---|---|---|
| DEN HAAG | 06-07-1990 | FONSECA Y FERNANDEZ H. |